## Europäisches Patentamt
## European Patent Office
## Office européen des brevets

(19)

(11) Veröffentlichungsnummer: **0 003 096**
**A1**

(12)
# EUROPÄISCHE PATENTANMELDUNG

(21) Anmeldenummer: 79100001.1

(22) Anmeldetag: 02.01.79

(51) Int. Cl.²: **A 01 K 31/24**
**A 47 B 88/00**

(30) Priorität: 07.01.78 DE 7800406 U
16.11.78 DE 7834081 U

(43) Veröffentlichungstag der Anmeldung:
25.07.79 Patentblatt 79/15

(84) Benannte Vertragsstaaten:
BE CH DE FR GB LU NL SE

(71) Anmelder: **Otterstedde, Ernst**
**Rauschenberg 1**
**D-4761 Bremen ü.Werl(DE)**

(72) Erfinder: **Otterstedde, Ernst**
**Rauschenberg 1**
**D-4761 Bremen ü.Werl(DE)**

(74) Vertreter: **Fritz, Herbert, Dipl.-Ing.**
**Mühlenberg 74**
**D-5760 Arnsberg 1(DE)**

(54) Taubenbatterie (Taubenhaus) mit mehreren Zellen für Taubenpaare.

(57) Die Zellen der Taubenbatterie sind als Schubladen (10) ausgebildet, die in ein Gestell einschiebbar sind. Bei jeder Schublade ist durch eine Trennwand (14) ein hinterer geschlossener Raum als Brutraum (10a) und ein vorderer offener Raum zum Anfliegen ausgebildet. In der Trennwand ist eine verschließbare Durchgangsöffnung. Alternativ kann über jeder Schublade (10) eine Zwischenschublade (31) mit einer niedrigeren Höhe eingeschoben werden. Wenn bei der Zwischenschublade der Boden unten ist, dann ist die Höhe des darunter befindlichen Brutraumes für eine Paarung zu gering, wenn der Boden der Zwischenschublade oben angeordnet ist, dann ist eine Paarung im Brutraum möglich.

Fig. 7

Patentanwalt

# Dipl.-Ing. H. Fritz

**5760 ARNSBERG 1**
Mühlenberg 74

- 1 -    78/279

29. 12. 1978/kl.

Herr
Ernst Otterstedde
Rauschenberg 1

4761 Bremen üb. Werl

<u>Taubenbatterie (Taubenhaus) mit mehreren Zellen</u>
<u>für Taubenpaare</u>

Der Erfindung liegt die Aufgabe zugrunde, eine
Taubenbatterie (Taubenhaus) so auszubilden, daß
bei einem gegebenen Raum möglichst viele Taubenpaare untergebracht werden können. Der Taubenhalter soll die Möglichkeit haben, die Zellen
möglichst schnell zu öffnen und zu schließen
im Hinblick auf Zeitgewinn bei Wettflügen.
Außerdem soll eine gute Lüftung und Sauberhaltung gewährleistet und die Voraussetzungen für
einen wirtschaftlichen Vertrieb sollen gegeben
sein. Alternativ soll in den Bruträumen eine
Paarung ermöglicht oder verhindert werden können.

Bei einer Taubenbatterie nach dem Hauptanspruch
der Erfindung sind die Zellen für die Taubenpaare als Schubladen ausgebildet, die in einem
Gestell einschiebbar und ausschiebbar gelagert

- 2 -    78/279

sind. Jede Schublade ist im Grundriß in einem hinteren geschlossenen Raum aufgeteilt, der als Brutraum benutzt werden kann, und in einem vorderen Raum, der nach vorne offen ist und der frei von den Tieren angeflogen werden kann. Als Abmessungen für jede Schublade wird eine Breite von etwa 40 cm, eine Höhe von 18 cm und eine Tiefe von etwa 60 cm empfohlen, wobei etwa 35 cm Tiefe auf den Brutraum entfallen. Diese Abmessungen haben sich in der Praxis bewährt. Bei einer Raumhöhe von 18 cm können sich die Tiere gegenseitig nicht beflügeln. Es ergibt sich eine sehr gute Raumausnutzung. In einem Gestell von etwa 180 cm können vier Zellen untergebracht werden. Die Höhe der Gestelle kann je nach Bedarf und je nach dem zur Verfügung stehenden Raum gewählt werden. An ein Gestell lassen sich beidseitig beliebige weitere Gestelle für weitere Schubladen anbauen. Wenn die Schubladen eingeschoben sind, sind die Bruträume geschlossen. Der Taubenhalter kann die Bruträume sehr schnell öffnen bzw. schließen, in dem er die Schubladen herauszieht und wieder einschiebt. Das Einsetzen und das Herausnehmen der Tiere erfolgt bei teilweise herausgezogener Schublade von oben. Die Schubladen lassen sich, wenn sie vollständig herausgezogen sind, leicht reinigen. Man kann übereinanderstehende Schubladen so einstellen, daß jede Schublade vorne etwas weiter vorsteht als die Schublade darunter. Dadurch kann an jeder Schublade Schmutz vom vorderen Rand des Bodens aus frei herunter fallen, ohne eine darunter befindliche Schublade schmutzig zu machen.

- 3 -     78/279

Ein pendelnd aufgehängtes Gitter in der Durchgangsöffnung der Trennwand ermöglicht den Durchgang der
Tiere von beiden Seiten. Mit Hilfe von zwei Riegeln kann das Gitter so festgestellt werden, daß
der Durchgang in beiden Richtungen unmöglich gemacht ist. Man kann aber auch mit Hilfe des einen
oder des anderen Riegels nur den Durchgang in der
einen oder in der anderen Richtung sperren.

Der Abstand zwischen der Rückwand und dem Boden
der Schublade ermöglicht das Beseitigen von
Schmutz über den hinteren Rand des Bodens. Außerdem ist dadurch eine gute Belüftung von der Rückseite her gewährleistet.

Der Boden, die Seitenwände, die Rückwand und die
Trennwand können gemäß der weiteren Erfindung als
Einzelteile aufeinanderliegend gelagert und versandt werden. Mit Hilfe von Steckverbindungen
und von Hakenverbindungen hat der Taubenhalter
die Möglichkeit, in einfacher Weise die Schubladen selbst zusammenzusetzen.

Die Gefahr, daß sich Ungeziefer einnistet, ist bei
den Schubladen, die von Fall zu Fall bewegt werden, gering. Jedenfalls kann Ungeziefer leicht
bekämpft werden. Die Teile der Schubladen können
Spanplatten, Holzplatten oder Kunststoffplatten
sein.

Bei einer Weiterentwicklung der Erfindung ist in
einem Gestell über jeder Schublade mit einem Brutraum eine niedrigere Schublade von der gleichen
Grundrißform wie der Brutraum eingeschoben. Diese
Zwischenschublade läßt sich entweder so einschieben, daß der Schubladenboden unten ist oder so,
daß der Schubladenboden oben ist. Die Höhe der
Schublade beträgt etwa 7 bis 8 cm. Wenn der Schub-

- 4 -    78/279

ladenboden unten ist, dann behält der darunterliegende Brutraum seine normale Höhe, bei der sich
die darin befindlichen Tiere nicht paaren können.

Ist jedoch eine Schublade mit oben angeordneten
Boden eingeschoben, so erhöht sich der darunterliegende Brutraum in die Höhe der Schublade, was soviel ausmacht, daß sich die im Brutraum aufhaltenden Tiere paaren können.

Im folgenden werden Ausführungsbeispiele der Erfindung näher beschrieben in Bezugnahme auf die beiliegenden Zeichnungen.

Es zeigen:

Fig. 1    einen lotrechten Querschnitt durch eine
          Zelle (Schublade) bei einer Taubenbatterie nach der Erfindung.

Fig. 2    ist ein horizontaler Schnitt gemäß II-II
          von Fig. 1

Fig. 3    ist ein Längsschnitt gemäß III-III von
          Fig. 2

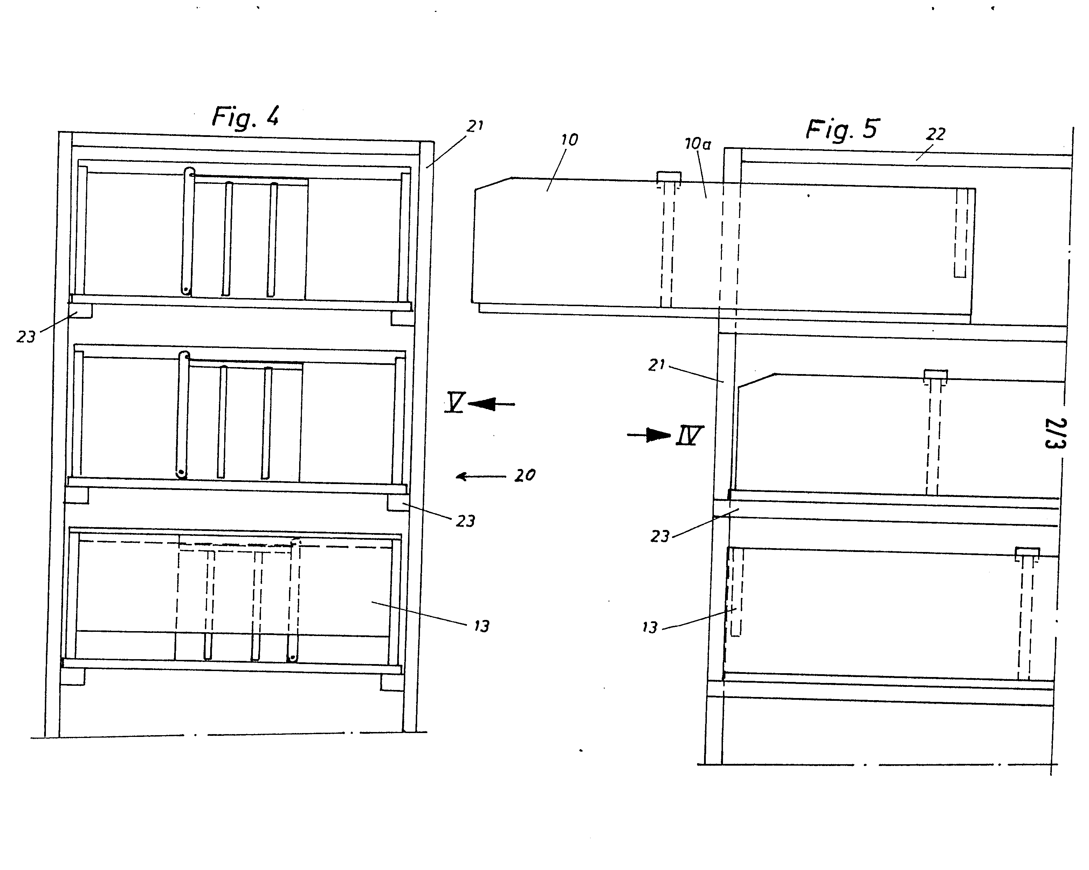

Fig. 4    ist eine Ansicht einer Batterie nach der
          Erfindung von vorne, bestehend aus 3 Zellen.

Fig. 5    zeigt zum Teil eine Ansicht einer solchen
          Batterie nach Fig. 4 in Richtung des Pfeiles 5.

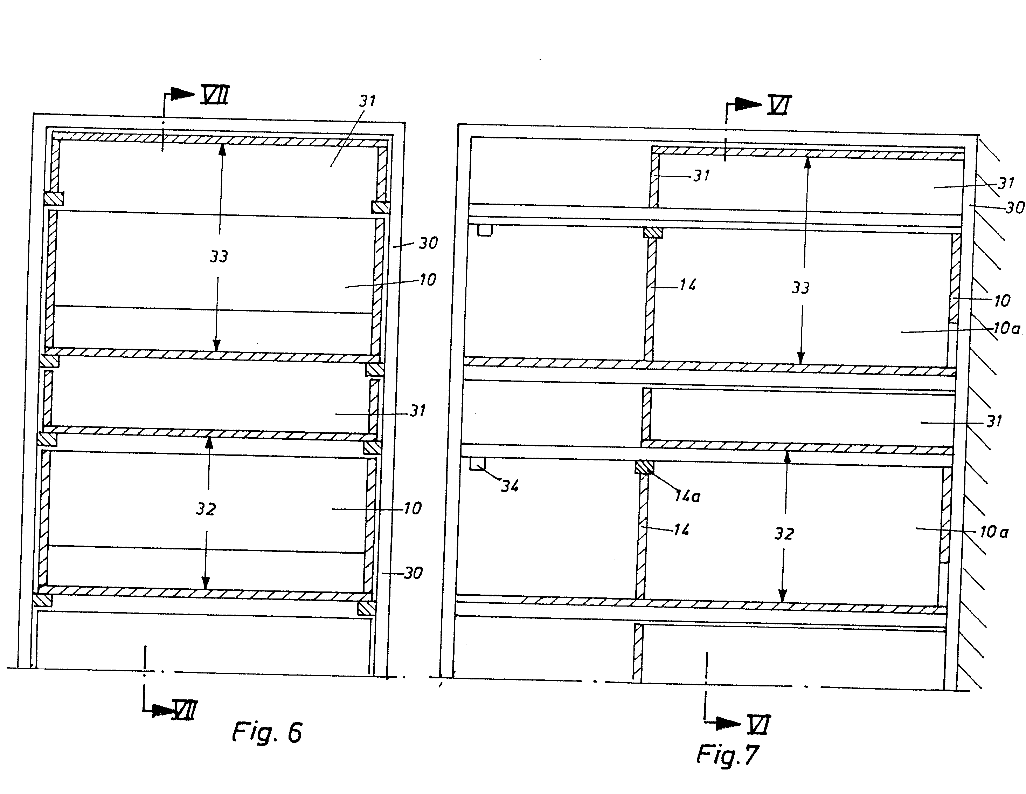

Fig. 6    zeigt einen lotrechten Querschnitt durch
          ein Taubenhaus mit Zwischenschubladen
          nach VI-VI von Fig. 7

Fig. 7    ist ein Längsschnitt nach VII-VII von Fig.6

- 5 -    78/279

Die Zellen einer Batterie nach der Erfindung haben die Form von Schubladen und bestehen aus einem Boden 11, zwei Seitenwänden 12, einer Rückwand 13 und einer Trennwand 14. Die genannten Teile können aus Preßspanplatten von etwa 10 mm Stärke hergestellt werden. Die beiden Seitenwände 12 und der Boden 11 sind jeweils durch Stifte 15 verbunden in lotrechter Anordnung. Die beiden Seitenwände 12 und die Rückwand 13 sind durch Stifte in horizontaler Anordnung verbunden. An der Trennwand 14 ist eine Kopfleiste 14c angebracht, welche ebenfalls mittels Stiften 15 in lotrechter Anordnung mit den Seitenwänden in Verbindung steht. Zur Herstellung einer zugfesten Verbindung zwischen den Seitenwänden und dem Boden sind weiterhin Haken 17 vorgesehen, die in bodenseitige Ösen eingehakt werden können. Mit Hilfe der Stifte 15 und der Haken 17 können Boden, Seitenwände, Rückwand und Trennwand werkzeuglos zusammengesetzt werden.

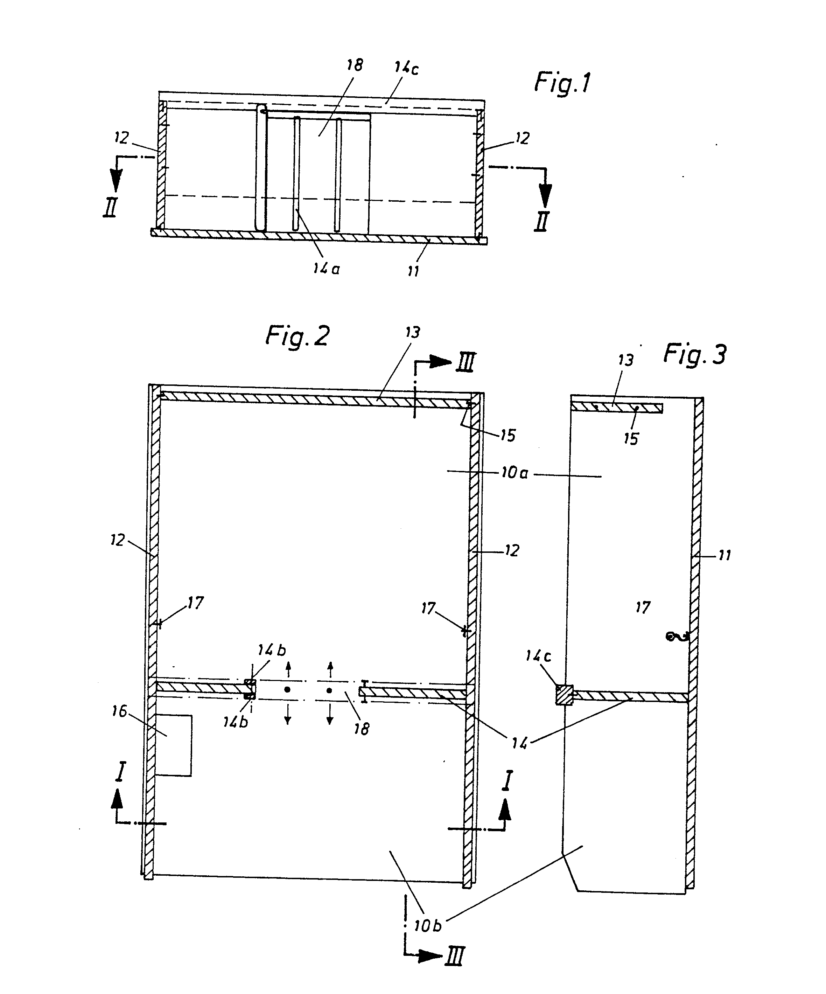

Nach dem dargestellten Ausführungsbeispiel beträgt die Breite einer Zelle etwa 40 cm, die Höhe 18 cm und die Tiefe etwa 60 cm. Aus Figur 3 erkennt man, daß zwischen dem Boden 11 und dem unteren Rand der Rückwand 13 einige cm Abstand über die gesamte Breite eingehalten sind.

Der Abstand der Trennwand 14 von der Rückwand 13 beträgt etwa 35 cm. In diesem Bereich ist ein allseitig von Wänden umgebener Raum 10a (Brutraum) umschlossen. Davor ist ein vorderer Raum 10b vorgesehen, der nach vorne hin offen ist. In diesem Raum befindet sich ein Futternapf 16.

In der Trennwand 14 zwischen Brutraum und dem vorderen Raum ist eine Durchgangsöffnung 18 vorgesehen. In dieser Durchgangsöffnung ist pendelnd ein Gitter 14a aufgehängt. An jeder Seite der Trennwand ist ein Riegel 14b vorgesehen. Wenn der innere Riegel horizontal, das heißt quer über die Durchgangsöffnung 18 gestellt ist, dann kann das Gitter 14a nur nach außen pendeln, sodaß die Tiere nur von innen nach außen und nicht von außen nach innen gelangen können.

Alternativ kann auch statt des inneren Riegels der äußere Riegel 14b quer zur Durchgangsöffnung eingestellt werden, sodaß das Gitter nur nach innen pendeln kann und die Tiere nur in den Brutraum, jedoch nicht herausgelangen können. Wenn die beiden Riegel quergestellt sind, dann wird sowohl der Eingang als auch der Ausgang durch das Gitter gesperrt.

Wie man aus Figur 4 und 5 erkennt, werden die Schubladen 10 jeweils von zwei Leisten 23 eines Gestelles 20 verschiebbar aufgenommen. Die Leisten 23 sowie ein Dach 22 sind am Pfosten 21 befestigt.

Gemäß Figur 5 ist die oberste Schublade 10 so weit herausgezogen, daß ein Teil des Brutraumes von oben her zugänglich ist. Die darunter liegende Schublade ist vollständig im Gestell eingeschoben. Die unterste Schublade nach Figur 4 und 5 ist umgekehrt eingeschoben, sodaß sich die Rückwand 13 vorne befindet und durch diese der Zugang der Zelle vollständig gesperrt ist.

Bei dem Taubenhaus nach Figur 6 und 7 ist in einem entsprechend ausgebildeten Gestell 30 jeweils über einer Schublade 10 eine Zwischenschublade 31 eingeschoben, welche die gleiche Grundrißform hat, wie der Brutraum 10a der darunterbefindlichen Schublade. Die Zwischenschubladen 31 sind so eingeschoben, daß der Grundriß sich mit dem Grundriß des Brutraumes 10a deckt, entweder Schubladenboden oben oder Schubladenboden unten. Wenn der Schubladenboden unten ist, dann behält der Brutraum im wesentlichen seine normale Höhe 32 von etwa 18 bis 20 cm, bei der eine Paarung der Tiere nicht möglich ist. Ist jedoch eine Zwischenschublade 31 mit Boden oben eingeschoben, dann ergibt sich bei dem Brutraum eine Gesamthöhe 33, welche den Tieren die Paarung gestattet. Bei den Schubladen 10a nach Figur 6 und 7 ist vorne an den Seitenwänden jeweils eine Ausnehmung 34 gebildet, wo die Trennwand 14 eingehängt werden kann. Durch Versetzen der Trennwand nach vorne kann der Brutraum verlängert werden.

Patentanwalt

**Dipl.-Ing. H. Fritz**

**5760 A R N S B E R G 1**
Mühlenberg 74

- 1 -    78/279

29. 12. 1978/k.

## Patentansprüche

1. Taubenbatterie (Taubenhaus) mit mehreren Zellen für Taubenpaare dadurch gekennzeichnet, daß von einem Gestell (20) mehrere Schubladen (10) aufgenommen sind und an jeder Schublade im Grundriß ein hinterer geschlossener Raum (10a) und ein vorderer nach vorne offener Raum (10b) aufgeteilt ist, und daß in einer Trennwand (14) eine durch ein Gitter (14a) verschließbare Durchgangsöffnung (18) gebildet ist.

2. Taubenbatterie nach Anspruch 1 gekennzeichnet durch ein pendelnd aufgehängtes Gitter (14a) für dessen Verschluß an jeder Seite der Trennwand ein Riegel (14b) vorgesehen ist.

3. Taubenbatterie nach Anspruch 1 dadurch gekennzeichnet, daß bei jeder Schublade zwischen dem unteren Rand der Rückwand (13) und dem Boden (11) über die gesamte Schubladenbreite einige cm Abstand eingehalten sind.

4. Taubenbatterie nach Anspruch 1 dadurch gekennzeichnet, daß jede Schublade aus einem Boden (11), zwei Seitenwänden (12), einer Rückwand (13) und einer Trennwand (14) besteht, und diese Teile durch in Bohrungen einsteckbare Stifte (15) und in Ösen einhakbare Haken (17) miteinander verbunden sind.

0003096

- 2 -    78/279

5. Taubenbatterie nach Anspruch 1 gekennzeichnet durch folgende Merkmale:

- es ist ein Gestell (30) vorgesehen, wo jeweils über jeder Schublade (10) eine Zwischenschublade (31) eingeschoben werden kann, welche die gleiche Grundrißfläche wie der Brutraum (10a) der Schublade hat.

- Die Höhe der Schublade liegt im Bereich von 18 cm, während die Höhe der Zwischenschublade etwa 8 cm beträgt.

6. Taubenbatterie nach Anspruch 1 dadurch gekennzeichnet, daß die Trennwand (14) an der Schublade lösbar ist, und daß zum Einstecken einer Kopfleiste (14c) der Trennwand auch vorne an den Seitenwänden der Schublade Ausnehmungen (34) gebildet sind.

0003096

Fig.1

Fig.2

Fig.3

*Fig. 4*

*Fig. 5*

VII

31

30

10

33

32

10

31

30

10

*Fig. 6*

VII

VI

31

31

30

14

33

10

10a

31

34

14a

14

32

10a

VI

*Fig. 7*

0003096

**Europäisches Patentamt**

# EUROPÄISCHER RECHERCHENBERICHT

Nummer der Anmeldung

EP 79 10 0001

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 574 395 (PETERSIME)<br>* Seite 2, Zeilen 5-12 *<br>--- | 1 |
| | DE - C - 851 566 (OBERLANDER)<br>* Seite 2, Zeilen 44-56 *<br>--- | 1 |
| | DE - C - 956 817 (MOELLER)<br>* Seite 2, Zeilen 1-16 *<br>--- | 1 |
| | BE - A - 457 915 (BELOT)<br>* Ganzes Dokument *<br>--- | 1 |
| | FR - A - 800 002 (ESPINASSE)<br>* Seite 1, Zeile 51 bis Seite 2, Zeile 33 *<br>--- | 1,4 |
| | DE - A - 1 607 086 (BARLOCCI)<br>* Seite 5; Anspruch 2 *<br>--- | 4 |
| | GB - A - 657 770 (HAWES)<br>* Seite 1, Zeilen 6-17; Seite 6, Zeilen 37-41 *<br>--- | 4 |
| | DE - C - 211 813 (KRAUPNER)<br>* Ganzes Dokument *<br>--- | 2 |
| | ./. | |

**KLASSIFIKATION DER ANMELDUNG (Int.Cl.²)**

A 01 K 31/24
A 47 B 88/00

**RECHERCHIERTE SACHGEBIETE (Int. Cl.²)**

A 01 K
A 47 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-04-1979 | CRUCHTEN |

EPA form 1503.1 06.78

## Europäisches Patentamt

# EUROPÄISCHER RECHERCHENBERICHT

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | <u>GB - A - 859 315</u> (SPINK)<br>* Seite 1, Zeile 81 bis Seite 2, Zeile 16 *<br><br>--- | 5 | |
| | <u>DE - C - 270 969</u> (SNAGA)<br>* Seite 1, Zeilen 6-11 *<br><br>-- | 5 | |
| | <u>DE - C - 186 356</u> (LEHMANN)<br>* Ganzes Dokument *<br><br>---- | 1,6 | RECHERCHIERTE SACHGEBIETE (Int. Cl.²) |

EPA Form 1503.2   06.78